# EUROPEAN PATENT SPECIFICATION

(11) **EP 0 693 192 B1**
(45) Date of publication and mention of the grant of the patent: **08.10.1997**
(21) Application number: 94907130.2
(22) Date of filing: 03.01.1994
(51) Int. Cl.: G06F 3/033, G06F 17/21

(54) **OBJECT-ORIENTED CURSOR TOOL**
OBJEKTORIENTIERTES CURSORWERKZEUG
OUTIL A CURSEUR ORIENTE OBJET

(30) Priority: 09.11.1993 US 150627
(43) Date of publication of application: 24.01.1996
(73) Proprietor: TALIGENT, INC., Cupertino, CA 95014 (US)
(72) Inventor: WISHNIE, Jeffrey, San Francisco, CA 94117 (US)
(74) Representative: Kindermann, Manfred
(86) International application number: US9400011
(87) International publication number: WO9513578

(56) References cited:
- EP-A- 0 533 607
- US-A- 5 142 618

## Description

### Field of the Invention

This invention generally relates to improvements in computer systems and more particularly to a system and method for employing tool objects and menu of tool object in an object-oriented operating system.

### Background of the Invention

Cursor tools specify a particular mode of user interaction with a document or frame by changing the behavior of the user controlled "cursor." For example, a user can select a "rectangle" cursor tool to indicate to the operating environment that pressing the mouse button and dragging the mouse will result in the creation of a rectangle on a documents drawing canvas. Tools can indicate modes for data selection, manipulation, or creation. Prior art examples of cursor tools can be found in applications such as MacPaint ® or MacDraw ®. However, these applications did not provide the user with management of more than one cursor at a time. Further, no integration into the operating system was provided to allow a tool active in one application to function in another application also. Negotiation capability between cursor tools and applications is also unknown in the prior art.

EP-A 0 533 607 discloses multiple selections in text on a computer display using multiple cursors. A normal typing cursor is displayed to indicate where newly input text will be inserted. A portion of text may be selected to conduct editing operation. When the text has been selected, the cursor is changed from the normal cursor to a second cursor the shape of which is different than the normal cursor. The different shape indicates that subsequent typing will activate the swipe and type operation on the selected text. When the second cursor is moved it reverts back to to the normal cursor. This system neither provides the user with management of more than one cursor at a time.

### Summary of the Invention

The invention is set forth in claims 1, 9 and 17. Dependent claims 2 to 8, 10 to 16 and 18 to 20 are related to particular embodiments of the invention.

An innovative system and method apply object-oriented techniques to integrate cursor tools into an object-oriented operating system. This integration includes management of multiple cursor tools in multiple tasks at the same time. Negotiation capability is provided allowing any cursor tool and any application to function together. This unique capability includes cross-partition memory management allowing cursor tool usage across applications and across partitions. The object-oriented framework provides an architecture for the distribution of cursor tools across applications so that application requirements are unaware of tools until the cursor tool function is requested. In technical terms this means that any application can use cursor tools without mapping in the cursor tools shared-library until after it has been determined that the cursor tool can successfully alter the application's information.

### Brief Description of the Drawings

Figure 1 is a block diagram of a personal computer system in accordance with a preferred embodiment;
Figure 2 is an example of a prior art cursor tool cluster used in MacDraw;
Figure 3 is a command panel in accordance with a preferred embodiment;
Figure 4 illustrates an example of a command panel bar in accordance with a preferred embodiment;
Figure 5 illustrates an example of a command panel in accordance with a preferred embodiment;
Figure 6 is an illustration of a tool cluster in accordance with a preferred embodiment;
Figure 7 illustrates some examples of various types of frames in accordance with a preferred embodiment;
Figure 8 illustrates a desktop with various frames in accordance with a preferred embodiment.;
Figure 9 illustrates a user selection of a rectangle cursor tool, a creator in accordance with a preferred embodiment; and
Figure 10 illustrates the selection arrow in accordance with a preferred embodiment;
Figure 11 illustrates the cursor rectangle tool becoming the active tool in accordance with a preferred embodiment;
Figure 12 illustrates the selection arrow passing over an inactive document, so the selection arrow becomes the active tool in accordance with a preferred embodiment;
Figure 13 illustrates the selection process for a smudge tool, a selector/effector, in accordance with a preferred embodiment;
Figure 14 illustrates enabling a smudge tool only when the cursor passes over a particular frame in accordance with a preferred embodiment;
Figures 15 and 16 illustrate the dynamics of the tool cursor as it passes through a content region in accordance with a preferred embodiment;
Figure 17 summarizes the window and frame processing in accordance with a preferred embodiment;
Figure 18 is a flow diagram showing the logic of tool processing in accordance with a preferred embodiment;
Figure 19 is a diagram showing the class hierarchy in accordance with a preferred embodiment;
Figure 20 is a TToolServer class diagram in accordance with a preferred embodiment;
Figure 21 illustrates the command classes in accordance with a preferred embodiment;
Figure 22 illustrates some of the pre-built geometries in accordance with a preferred embodiment; and
Figure 23 illustrates the utility classes in accordance with a preferred embodiment.

### Detailed Description Of The Invention

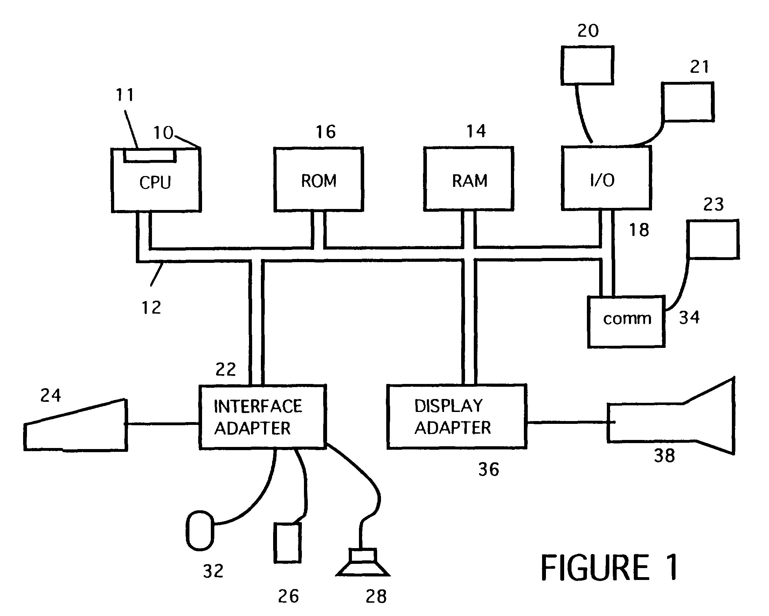

The invention is preferably practiced in the context of an operating system resident on a personal computer such as the IBM ® PS/2 ® or Apple ® Macintosh ® computer. A representative hardware environment is depicted in Figure 1, which illustrates a typical hardware configuration of a computer in accordance with the subject invention having a central processing unit 10, such as a conventional microprocessor, with a built in non-volatile storage 11, and a number of other units interconnected via a system bus 12. The workstation shown in Figure 1 includes a Random Access Memory (RAM) 14, Read Only Memory (ROM) 16, an I/O adapter 18 for connecting peripheral devices such as a disk unit 20, and a diskette unit 21 to the bus, a user interface adapter 22 for connecting a keyboard 24, a mouse 26, a speaker 28, a microphone 32, and/or other user interface devices such as a touch screen device (not shown) to the bus, a communication adapter 34 for connecting the workstation to a data processing network 23 and a display adapter 36 for connecting the bus to a display device 38. The computer has resident thereon an operating system such as the Apple System /7 ® operating system.

### Object Oriented Programming Techniques

In a preferred embodiment, the invention is implemented in the C++ programming language using object oriented programming techniques. As will be understood by those skilled in the art, Object-Oriented Programming (OOP) objects are software entities comprising data structures and operations on the data. Together, these elements enable objects to model virtually any real-world entity in terms of its characteristics, represented by its data elements, and its behavior, represented by its data manipulation functions. In this way, objects can model concrete things like people and computers, and they can model abstract concepts like numbers or geometrical concepts. The benefits of object technology arise out of three basic principles: encapsulation, polymorphism and inheritance.

Objects hide, or encapsulate, the internal structure of their data and the algorithms by which their functions work. Instead of exposing these implementation details, objects present interfaces that represent their abstractions cleanly with no extraneous information. Polymorphism takes encapsulation a step further. The idea is many shapes, one interface. A software component can make a request of another component without knowing exactly what that component is. The component that receives the request interprets it and determines, according to its variables and data, how to execute the request. The third principle is inheritance, which allows developers to reuse pre-existing design and code. This capability allows developers to avoid creating software from scratch. Rather, through inheritance, developers derive subclasses that inherit behaviors, which the developer then customizes to meet their particular needs.

A prior art approach is to layer objects and class libraries in a procedural environment. Many application frameworks on the market take this design approach. In this design, there are one or more object layers on top of a monolithic operating system. While this approach utilizes all the principles of encapsulation, polymorphism, and inheritance in the object layer, and is a substantial improvement over procedural programming techniques, there are limitations to this approach. These difficulties arise because it is easy for a developer to reuse their own objects, it is difficult to use objects from other systems, and a developer still needs to reach into the internal, non-object layers with procedural Operating System (OS) calls.

Another aspect of object oriented programming is a framework approach to application development. One of the most rational definitions of frameworks come from Ralph E. Johnson of the University of Illinois and Vincent F. Russo of Purdue. In their 1991 paper, Reusing Object-Oriented Designs, University of Illinois tech report UIUCDCS91-1696 they offer the following definition: "An abstract class is a design of a set of objects that collaborate to carry out a set of responsibilities. Thus, a framework is a set of object classes that collaborate to execute defined sets of computing responsibilities." From a programming standpoint, frameworks are essentially groups of interconnected object classes that provide a pre-fabricated structure of a working application. For example, a user interface framework might provide the support and "default" behavior of drawing windows, scroll bars, menus, etc. Since frameworks are based on object technology, this behavior can be inherited and overridden to allow developers to extend the framework and create customized solutions in a particular area of expertise. This is a major advantage over traditional programming since the programmer is not changing the original code, but rather extending the software. In addition, developers are not blindly working through layers of code because the framework provides architectural guidance and modeling but at the same time frees them to then supply the specific actions unique to the problem domain.

From a business perspective, frameworks can be viewed as a way to encapsulate or embody expertise in a particular knowledge area. Corporate development organizations, Independent Software Vendors (ISV)s and system integrators have acquired expertise in particular areas, such as manufacturing, accounting, or currency transactions. This expertise is embodied in their code. Frameworks allow organizations to capture and package the common characteristics of that expertise by embodying it in the organization's code. First, this allows developers to create or extend an application that utilizes the expertise, thus the problem gets solved once and the business rules and design are enforced and used consistently. Also, frameworks and the embodied expertise behind the frameworks have a strategic asset implication for those organizations which have acquired expertise in vertical markets such as manufacturing, accounting, or bio-technology have a distribution mechanism for packaging, reselling, and deploying their expertise, and furthering the progress and dissemination of technology.

Historically, frameworks have only recently emerged as a mainstream concept on computing platforms. This migration has been assisted by the availability of object-oriented languages, such as C++. Traditionally, C++ was found mostly on UNIX systems and researcher's workstations, rather than on computers in commercial settings. It is languages such as C++ and other object-oriented languages, such as Smalltalk and others, that enabled a number of university and research projects to produce the precursors to today's commercial frameworks and class libraries. Some examples of these are InterViews from Stanford University, the Andrew toolkit from Carnegie-Mellon University and University of Zurich's ET++ framework.

There are many kinds of frameworks depending on the level of the system and the nature of the problem. The types of frameworks range from application frameworks that assist in developing the user interface, to lower level frameworks that provide basic system software services such as communication, printing, file systems support, graphic, etc. Commercial examples of application frameworks are MacApp (Apple), Bedrock (Symantec), OWL (Borland), NeXTStep App Kit (NeXT), and Smalltalk-80 MVC (ParcPlace).

Programming with frameworks requires a new way of thinking for developers accustomed to other kinds of systems. In fact, it is not like "programming" at all in the traditional sense. In old-style operating systems such as DOS or UNIX, the developer's own program provides all of the structure. The operating system provides services through system calls-the developer's program makes the calls when it needs the service and control returns when the service has been provided. The program structure is based on the flow-of-control, which is embodied in the code the developer writes.

When frameworks are used, this is reversed. The developer is no longer responsible for the flow-of-control. The developer must forego the tendency to understand programming tasks in term of flow of execution. Rather, the thinking must be in terms of the responsibilities of the objects, which must rely on the framework to determine when the tasks should execute. Routines written by the developer are activated by code the developer did not write and that the developer never even sees. This flip-flop in control flow can be a significant psychological barrier for developers experienced only in procedural programming. Once this is understood, however, framework programming requires much less work than other types of programming.

In the same way that an application framework provides the developer with prefab functionality, system frameworks, such as those included in a preferred embodiment, leverage the same concept by providing system level services, which developers, such as system programmers, use to subclass/override to create customized solutions. For example, consider a multi-media framework which could provide the foundation for supporting new and diverse devices such as audio, video, MIDI, animation, etc. The developer that needed to support a new kind of device would have to write a device driver. To do this with a framework, the developer only needs to supply the characteristics and behavior that is specific to that new device.

The developer in this case supplies an implementation for certain member functions that will be called by the multi-media framework. An immediate benefit to the developer is that the generic code needed for each category of device is already provided by the multi-media framework. This means less code for the device driver developer to write, test, and debug. Another example of using system frameworks implements I/O frameworks for SCSI devices, NuBus cards, and graphic devices. Because there is inherited functionality, each framework provides support for common functionality found in its device category. Other developers depend on these consistent interfaces various other devices.

A preferred embodiment takes the concept of frameworks and applies it throughout the entire system. For the commercial or corporate developer, system integrator, or OEM, this means all the advantages that have been illustrated for a framework such as MacApp can be leveraged not only at the application level for such things as text and user interfaces, but also at the system level, for services such as graphics, multi-media, file systems, I/O, testing, etc.

Application creation in the architecture of a preferred embodiment is essentially like writing domain-specific puzzle pieces that adhere to the framework protocol. In this manner, the whole concept of programming changes. Instead of writing line after line of code that calls multiple API hierarchies, software will be developed by deriving classes from preexisting frameworks within this environment, and then adding new behavior and/or overriding inherited behavior as desired.

Thus, the developer's application becomes the collection of code that is written and shared with all the other framework applications. This is a powerful concept because developers will be able to build on each other's work. This also provides the developer the flexibility to customize as much or as little as needed. Some frameworks will be used just as they are. In some cases, the amount of customization will be minimal, so the puzzle piece the developer plugs in will be small. In other cases, the developer may make very extensive modifications and create something completely new. In a preferred embodiment, as shown in Figure 1, a program resident in the RAM 14, and under the control of the CPU 10, is responsible for managing various tasks using an object oriented graphic framework. The program employs a new architecture to implement cursor tools. "Tools" are normally associated with icons that can be clicked on to select. Once selected, the tool changes the cursor's shape and lets the user draw in the content region of a document. MacPaint's paint-brush tool is a classic example of a cursor tool. These tools are referred to as cursor tools because they change the cursor and effect the data directly under the cursor. Characteristics that are associated with cursor tools include selection by clicking on a tool icon; and changing the current cursor shape to indicate a user is "holding" the selected tool. Cursor tools come in various types including creators, selectors, and selector/effectors. Creators are active over the content region of the active document. Selectors and Selector/Effectors are active only over frames of a type they understand, in the active document.

### Persistence

In the Apple Macintosh computer, the selected cursor tool persists within an application. For example, if you select the paint-brush tool in MacPaint, switch to MacDraw and select the Rectangle tool, and then switch back to MacPaint, the selected tool will be the paint-brush―the last tool you selected in MacPaint. In a preferred embodiment, tools will persist within a place, but not across places. For example, if a rectangle cursor tool is selected in one application, it will remain the selected cursor tool no matter which frame or document that is made active.

### Examples of Cursor Tools

- A polygon cursor tool: 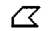
- The arrow selection cursor tool: 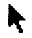
- A color-grabber ("eye-dropper") cursor tool: 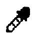

### Cursor Tool Cluster

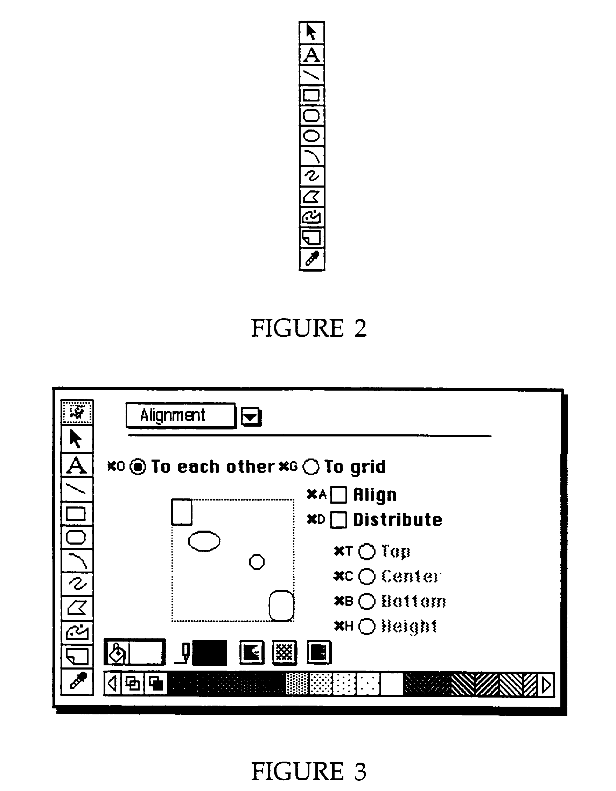

Clusters are a means for logically and visually grouping related cursor tools. One can think of them as a view that holds various cursor tools. Tool clusters are not themselves panels―developers can use them on panels. Figure 2 is an example of a prior art cursor tool cluster used in MacDraw.

### Command Panels

Command panels group and organize all of a frame's commands that do not appear directly on the frame furniture or in a frame's menu. Command panels provide interfaces to these commands through cursor tools (clustered or not), buttons, sliders, pull-down menus, scrolling lists, text-fields, additional panels, or any custom control a developer may create. All command panels must contain a frame-creation tool―a cursor tool that can be used to draw a frame of the type represented by the panel.

The relationship between a command panel and its frames is similar to the relationship between an application and its documents. The command panel can be used to create its frames, and it holds much of the interface for manipulating the frame and its contents. But there is a significant difference. In prior art tool systems, the application owns its documents, literally surrounding them. In a preferred embodiment, the document is supreme. The document owns and surrounds the frames, the command panel is simply a tool that a user can employ, using it to create or manipulate frames in a document.

In this model, an application is simply a command panel and a stationery pad designed to provide an interface to the commands for a frame of a particular type, and provide a frame creation cursor tool for the frame of its type. Command panels group controls that work on a single frame-type together, and vendors will often create a command panel for each of their frame types, so command panels may appear to group controls by vendor. For example, Wordperfect would develop a Wordperfect command panel for their Wordperfect frame type. For common frame-types, such as graph edit applications, there may be several different command panels. Command panels could eventually be user constructable, so that users could group all their image manipulation controls, from whatever vendor they choose, on a single command panel.

A command can be accessed through the global command panel container or a command panel bar. The command panel for the active frame can be brought to the front with a multiple key sequence, such as a control-key press. Figure 3 is a command panel in accordance with a preferred embodiment.

The command panel bar contains icons that represent various command panels that a user may have installed. In addition, the top two icons on the bar are special: the topmost icon always represents the command panel for the active frame, and the second icon always contains a command panel with a cluster of tools that apply globally to any frame-type. The icons include a selection arrow and an optional magnifier and color-grabber. Unlike earlier designs which suggested that the command panel bar would be filled with all the command panels of the frames in a document, or on the desktop, in this design, the user determines which panels are available.

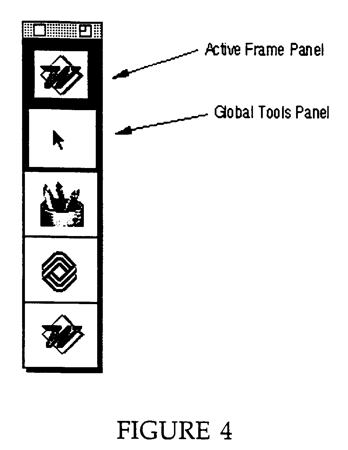

Actions available to a user through command panels include capability to click-drag an icon to pull out an associated command panel. Command panels may also be removed from the command panel bar and placed on the desktop. Single-clicking a command panel icon selects a default tool which is usually the frame creation tool. In the case of the select tool command panel, the default tool is the arrow selection tool. Figure 4 illustrates an example of a command panel bar in accordance with a preferred embodiment.

### Command Panel Container

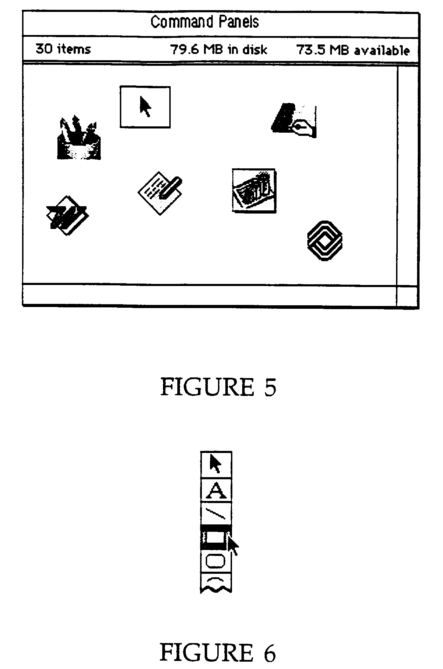

When users install command panels, they are gathered into a global command panel container in the workspace. They can always access the panels in this container, or they can place them on various command panel bars. Figure 5 illustrates an example of a command panel in accordance with a preferred embodiment.

### Current Tool versus Active Tool

Users set the current cursor tool by selecting it from within a tool cluster. Figure 6 is an illustration of a tool cluster in accordance with a preferred embodiment. The current tool only becomes active when the user moves the cursor over a screen region in which the tool can function. Whenever the cursor is in a region inappropriate for the current tool, the active tool reverts to the selection tool and the cursor shape reverts to the arrow.

### Active regions

Active regions are only within the active document. Anywhere outside of the active document, including the active document's furniture, the active tool becomes the selection arrow. Within the active document, the active regions depend on the current tool and the type of the frame under the cursor. Because of click-through, whether a frame is active or not is unimportant. As mentioned above, cursor tools come in three categories: creators, selectors, and selector effectors.
- Creator's create new data, i.e. a circle drawing tool.
- Selectors select existing data, i.e. Photoshop's Magic Wand.
- Selector/Effectors select and change data, i.e. MacPaint's eraser tool.

Creator cursor tools are active above all frames that can embed. If a user draws a circle on a frame without a circle data type, the Tool Framework will create a new frame that does understand circles, place the circle in the new frame, and embed the new frame into the existing frame. This explicit frame creation allows users to create data where they need it, when they need it, without having to first create the appropriate frame. Selector and Selector/Effector cursor tools are active only above frames of a type they understand. For example, the MacPaint eraser tool is only active above MacPaint frames. Above all other frames, the active tool becomes the selection arrow.

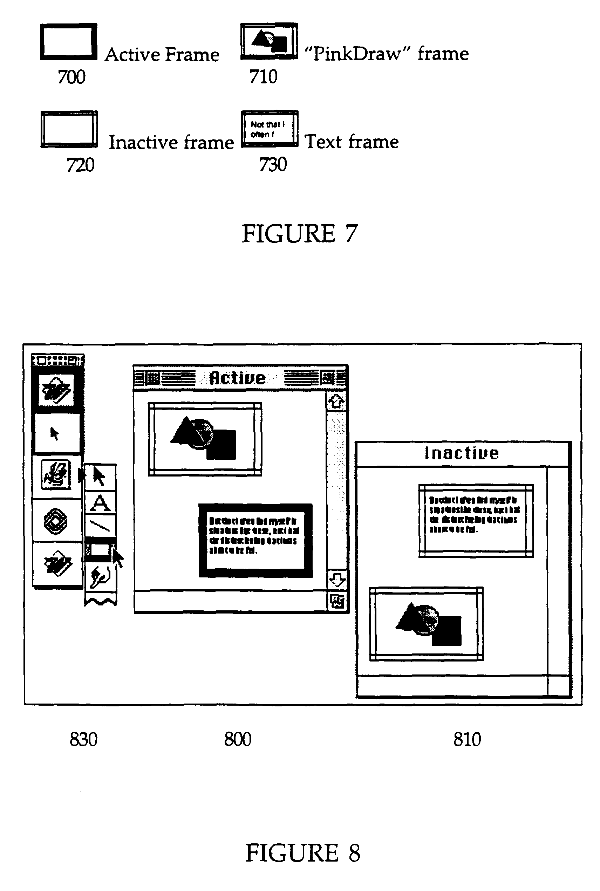

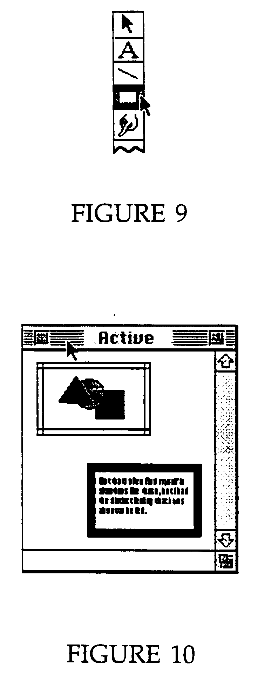

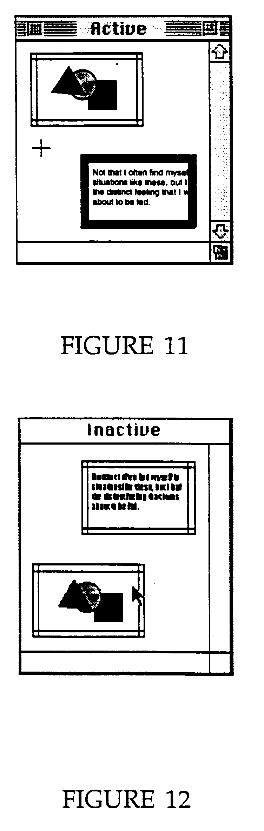

Figure 7 illustrates some examples of various types of frames in accordance with a preferred embodiment. An Active frame 700, Inactive frame 720, PinkDraw frame 710 and Text Frame 740 each have distinguishing characteristics. Figure 8 illustrates a desktop with various frames in accordance with a preferred embodiment. In the Figure, a user has two documents open, one active 800, the other inactive 810. Both documents have two frames, one PinkDraw frame and one Text frame. The user is choosing tools from PinkDraw's command panel 830. Figure 9 illustrates a user selection of a rectangle cursor tool, a creator in accordance with a preferred embodiment. Outside of the active document's content region (root-frame), the active tool is the selection arrow. Figure 10 illustrates the selection arrow in accordance with a preferred embodiment. Figure 11 illustrates the cursor rectangle tool becoming the active tool in accordance with a preferred embodiment. Figure 12 illustrates the selection arrow passing over an inactive document, so the selection arrow becomes the active tool in accordance with a preferred embodiment.

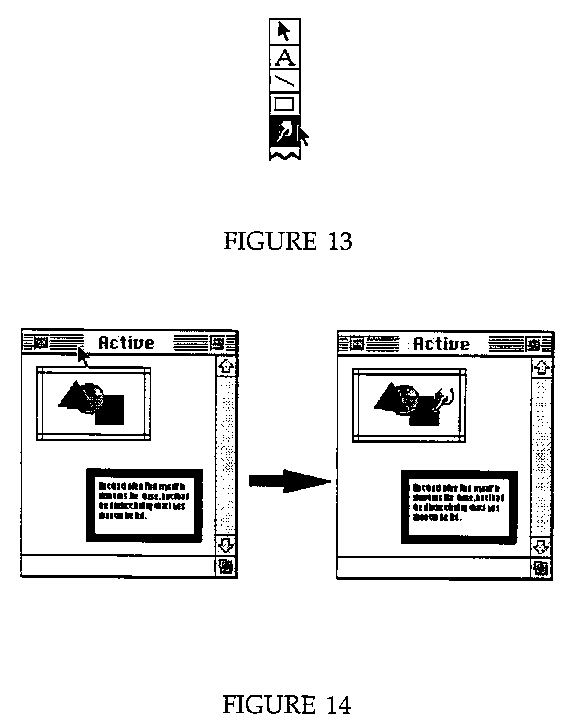

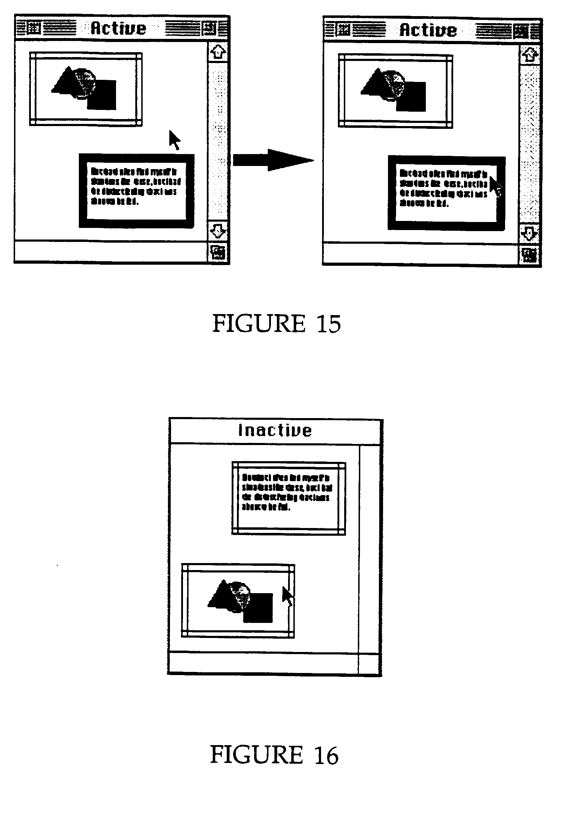

Figure 13 illustrates the selection process for a smudge tool, a selector/effector, in accordance with a preferred embodiment. Figure 14 illustrates enabling a smudge tool only when the cursor passes over a particular frame in accordance with a preferred embodiment. Figures 15 and 16 illustrates the dynamics of the tool cursor as it passes through a content region in accordance with a preferred embodiment. As the cursor passes through a content region of the active document and other non-PinkDraw frames, the active tool becomes the selection tool.

### Accessing/Retrieving Command Panels

There are several ways to access a command panel. Users can open a panel by double-clicking its icon from within the global panel container or any other workspace container. For any panels that have been placed on the Panel Bar, users can simply select the panel's icon and retrieve it. When users select a frame, they can issue a "Show command panel" command, and the workspace will open the default command panel for the current frame's type. So, If I select a PinkDraw frame and choose "Show command panel", the workspace will open the PinkDraw command panel.

### Multiple command panels per Frame Type

Some document types can be opened by several applications. For example Painter, MacPaint, Photoshop, MacDraw, and TeachText can all open PICT files. In accordance with a preferred embodiment, certain frame types, such as images and text, will have many different command panels. To choose among all the possible command panels when working with a particular frame, a frame's property sheet allows users to select a command panel and even set a default command panel for a particular frame's type. The "Show command panel" command opens a default command panel.

### Frame and Window Activation

It is important to understand how windows and frames are activated, because tools other than the selection arrow are only active within the active window. When discussing activation, there are two issues to consider. First, when does the window or frame activate? Second, how does the initial click into an inactive frame or window effect the data?

### Frames

Frames must activate on mouse-down because their activation feedback may be important to the action the user is initiating. For example, if the user clicks down on a frame with the rectangle cursor tool, the frame must activate to show its bounds so that the user can know where the rectangle will be clipped. The first click within an inactive frame not only causes activation, but because of click-through effects, the contents of the frame behave as if the frame had already been active. So, if the eraser cursor tool is selected and used to draw across an inactive frame, the first click detected will erase some data.

### Window

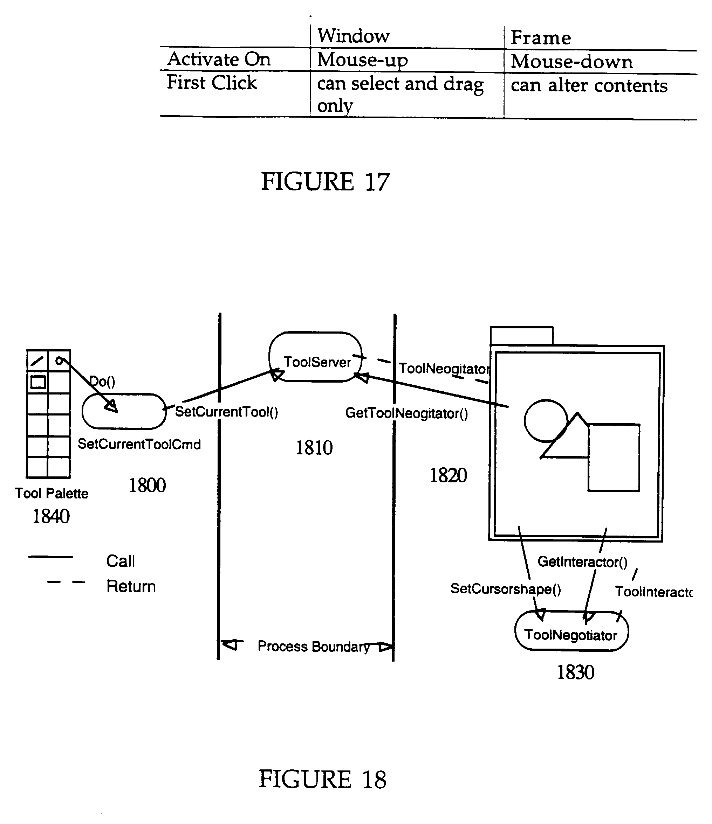

Windows activate when a mouse-up event occurs within their bounds. The mouse-up can come after a click within the window's bounds or as the user releases the mouse button when dragging an object into the window. Because windows do not activate until mouse-up, the active tool will always be the selection arrow during a drag. If the current tool is something other than the selection arrow, it will become active only after the drag has been completed and the target window has activated. The first click within an inactive window cannot affect the contents of the window other than to select or drag them. It is important that the first click do nothing damaging so that users can't accidentally destroy data by swiping a selector/effector tool across the screen. But, by letting the first click select and drag data, drag-and-drop actions are accelerated. Since the window will not activate until mouse-up, an object can be selected from an inactive window and dragged into an active window without ever causing the inactive window to come to the front. Figure 17 summarizes the window and frame processing in accordance with a preferred embodiment.

### Tools Architecture Overview

The tools system provides a structure for developing cursor tools that can be used across frames and documents, and provides the necessary system services for transporting tools from tool selection controls (such as a tool palette) to the frames where they can effect user data. The TTool class provides system services for transporting tools from tool selection controls. A TTool is a simple class that contains a TToolInteractor, a cursor graphic, a palette graphic, a text name, and type negotiation information. A TToolInteractor is a straightforward subclass of TInteractor. It adds only protocol for passing a view and presentation to the interactor. Once a user has moused-down in an appropriate frame with a tool, the TToolInteractor modifies the data visible in the frame. The palette graphic and text name are used by controls that set the current tool for displaying an identifying graphic or text string. The cursor graphic is the shape that the cursor will take on when the tool crosses over a frame in which it can be used. The type negotiation information is a list of selection types which the tool can work on. This list is used to determine whether a tool can function in a given frame.

### Setting and Distributing the Current Tool

Three objects work in concert to set and distribute the current tool. They are the SetCurrentToolCmd, the ToolServer, and the ToolNegotiator.

### SetCurrentToolCmd

When activated, the SetCurrentToolCmd takes a given TTool and sends it to the ToolServer. The SetCurrentToolCmd is designed to be placed in controls such as buttons and tool palettes. The developer will most often construct a tool palette out of a set of buttons, each with a SetCurrentToolCmd, each command holding a different TTool.

### Tool Server

The ToolServer's job is to associate Tools with Cursors. When a SetCurrentToolCmd sends to the ToolServer a tool and a cursor, the server sets the tool as the current tool for the given cursor. Later, when a view asks for the current tool for a given cursor, the ToolServer looks up the cursor and passes the tool, through a ToolNegotiator, to the requesting view.

### ToolNegotiator

The ToolNegotiator's role is to negotiate with views and then transport the current tool to that view if the negotiation has succeeded. When a cursor is entered, the following sequence of commands occur. First, the cursor passes over the active frame. Then, the frame's content view receives "CursorEntered" notification and requests a negotiator from the ToolServer. Then, the ToolServer constructs a negotiator for the current tool and sends it to the requesting view, and the view then gives a selection to the tool negotiator and executes a command to change the cursor shape. Finally, the tool negotiator compares its list of selection types to the type of the selection provided by the view. If the selection is a type that the tool understands, the negotiator changes the cursor shape to the current tools cursor graphic.

### Sequence of Calls on MouseDown

In a many-cursor environment the view cannot be sure that the cursor that moused down was the same that it most recently negotiated with, so it must again request a negotiator from the ToolServer. The server returns a negotiator and the view passes a selection to the negotiator. If the negotiation succeeds, the negotiator requests the current ToolInteractor. That is, if the tool understands the selection, the negotiator returns a ToolInteractor to the view. The view sets appropriate values in the ToolInteractor and starts the interaction. At this point the interactor takes over and proceeds to run the user interaction.

### Flow Diagram

Figure 18 is a flow diagram showing the logic of tool processing in accordance with a preferred embodiment. Processing commences at 1800 where a tool palette 1840 has detected the selection of a particular tool. At 1800, the current tool is activated and the information associated with the current tool is passed to the toolserver 1810. The toolserver 1810, in turn is called by the tool negotiator 1830 to activate the appropriate feature of the tool via a call 1820 to the toolserver 1810. The toolserver 1810 in turn communicates back status information to the application via a tool negotiation message 1820 to the tool negotiator 1830 to update the display.

### TAbstractTool

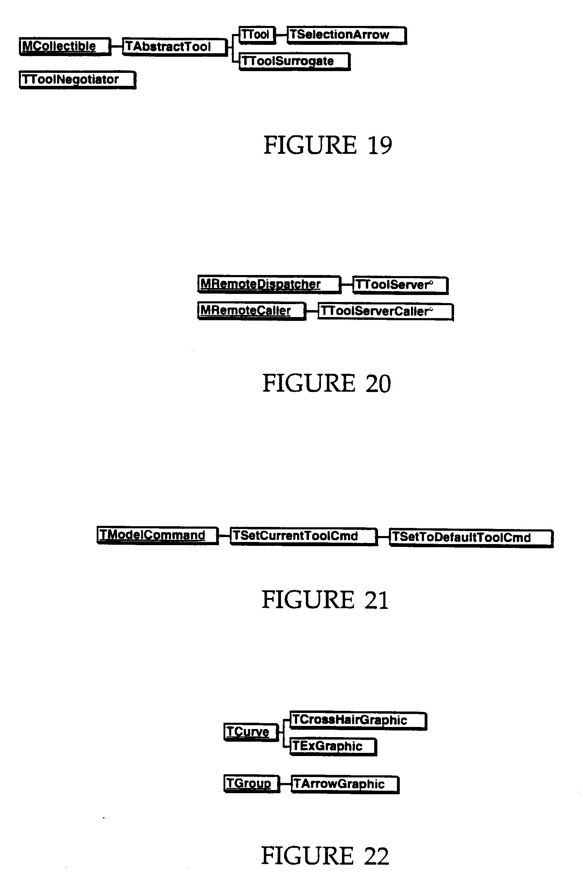

Figure 19 is a diagram showing the class hierarchy in accordance with a preferred embodiment. Of particular interest are, TGlobalID GetID() const; which gets the tools I.D; and virtual void SetID(TGlobalID); which sets the tool's I.D. The cursor tools framework uses a tool's global I.D. to uniquely identify it within the tool server and to provide appropriate tool changed notification to tool setting commands.

### TTool

TTool is an abstract superclass for defining tools. It also has several static methods for communicating with the tool server. TTool subclasses actually perform very little work. They provide graphics and a text name for menus and tool palettes, a cursor graphic to represent the tool when active, a list of selection types for which the tool is valid, and they create an interactor subclass that is activated when the user mouses-down in a valid frame with the tool selected. The object that performs the actual work of creating or modifying data in a frame is the interactor.

### Pure Virtual Methods

virtual MGraphic* CreatePaletteGraphic() const=0;
   Subclasses must return a new MGraphic to be used on a tool palette or a menu.
   virtual void GetPaletteText(TText&) const=0;
   Subclasses must set the TText's text to a string appropriate for a menu item representing the tool.
virtual MGraphic* CreateCursorGraphic() const=0;
   Subclasses must return a new MGraphic to be used as the cursor when the tool is active.
virtual TToolInteractor* CreateInteractor(TToken) const=0;
   Subclasses must return a new TToolInteractor to be started when a user mouses down in a valid frame. The token passed in is the type of selection representing the clicked-in frame. The TTool can use the token to create different interactors depending on the type of the receiving frame.
virtual void CreateTypeInfoList(TSequence&) const=0;
   Subclasses must fill out the sequence with a token for each type of selection from each model that the tool can work within (when TType objects become available, the tokens will be replaced with a TType for each appropriate selection). For example, if a tool works with GrafEdit models and TTextContainer models, the subclass would place TGrafEditSelection::kType and TTextSelection::kType in the sequence.
   In addition, tools have two behaviors that are set through Boolean methods:
   Boolean IsOneShot() const;
   Defaults to FALSE. "One-shot" tools are selected for only a single use. Once the tool is used, the Tool Server automatically switches the current tool to the default tool (the Selection Arrow). By default, this method returns FALSE so that the tool will remain the current tool until the user selects a new tool from a palette or a menu.
void SetIsOneShot(Boolean isOne=TRUE);
   Use this method to dynamically set a tool to be one-shot or not. For example, a palette developer might set tools to always be one-shot when users single-click in the palette, but to be sticky (not one-shot) is the user double-clicks.
virtual Boolean IsCreationTool() const;
   Defaults to FALSE. Tools that can create data are valid in ANY embedding frame. If the tool does not have explicit knowledge of the frame in which it is being used, the framework will create and embed a new frame that the tool does know about. Currently the framework does not provide embedding support, so override this method only if your tool can explicitly create and embed frames.

### Static Methods For Accessing The Tool Server

static void SetCurrentTool(const TTool& theTool);
   Sets "theTool" as the current tool.
static TTool* CopyCurrentTool();
   Returns a copy of the current tool.
static TToolNegotiator* CopyCurrentToolNegotiator();
   Returns a new TToolNegotiator for the current tool.
static TTool* CopyDefaultTool();
   Returns a copy of the systems default tool. For now the default tool is the TSelectionArrow.
static void SetToDefaultTool();
   Sets the current tool to the default tool.

### Static Methods For Creating Notification Interests

static TInterest* CreateCurrentToolChangedInterest();
   Returns an interest used to receive notification each time the current tool changes.
static TInterest* CreateCurrentToolTypeChangedInterest();
   Returns an interest used to receive notification each time the current tool changes to a tool of a different class.
TToolSurrogate
   A very simple TAbstractTool subclass. It adds no data members. Its only interesting method is an operator defined so that TToolSurrogates can be set to any TAbstractTool.
   TSelectionArrow
   A simple TTool subclass with the following attributes:
   Palette Graphic: The standard Pink Arrow.
   Cursor Graphic: The standard Pink Arrow.
   Palette Text: "Arrow".
   Type Info: TModelSelection::kType. The arrow is valid in any frame.
   Tool Interactor: None. The selection arrow returns NIL for its interactor. The clicked-in frame must provide its own selection interactor.
TToolNegotiator
   TToolNegotiators are lightweight monomorphic objects that represent the current tool in a receiving team. For example, when the cursor passes over a frame in the active document, the frame is passed a TToolNegotiator. The frame negotiates with the TToolNegotiator and tells the negotiator whether or not to change the cursor shape. One mouse-down, the frame also gets TToolNegotiator, negotiates to see if the current tool is valid in the frame. If so, the frame gets the ToolInteractor from the TToolNegotiator, and starts the interaction.
TToken Accepts(const TModelSelection&) const;
   Returns the type of the selection if the current tool is valid for the given selection and has explicit knowledge of the given selection. Returns
   TTool::kEmbeddingSelections if the current tool is a creation tool and is valid for the given selection only because the current selection is an embedding selection. Returns TTool::kSelectionRejected if the tool is not valid for the given selection.
void AdjustCursorShapeFor(const TModelSelection&) const;
   Sets the cursor shape to the current tool's shape if the tool can apply to the given selection.
TToolInteractor* CreateInteractor(const TModelSelection&) const;
   First calls Accepts for the selection. If the current tool accepts the given selection, it returns the tool's interactor. Otherwise it returns NIL. Common use is:

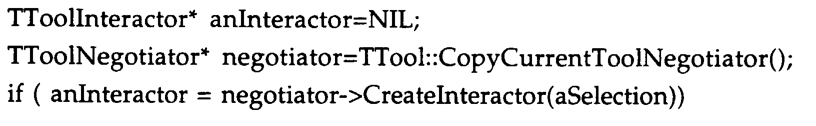

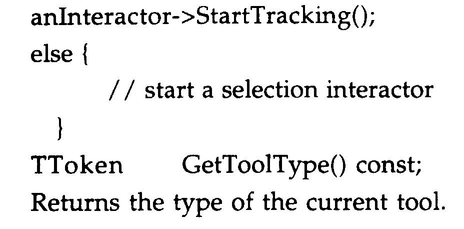

### TToolInteractor

TToolInteractor's have methods for setting and getting a view and selection which subclasses often pass to there interaction states. TToolInteractors know if they where created by a one-shot tool. If they were, they call TTool::SetToDefaultTool in TToolInteractor::StopTracking.

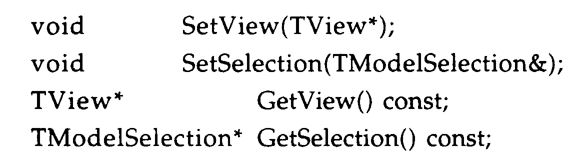

### CALLER/DISPATCHER CLASSES

### TToolServer

TToolServer is a dispatcher class that implements the tool server. Figure 20 is a TToolServer class diagram in accordance with a preferred embodiment.

### TToolServerCaller

TToolServer Caller is the dispatcher class used by TTool to communicate with the tool server. You should never have to instantiate one of these or speak to one directly.

### COMMAND CLASSES

TSetCurrentToolCmd
   Sets the current tool in the tool server to its bound tool. Figure 21 illustrates the command classes in accordance with a preferred embodiment.
TSetCurrentToolCmd(const TTool& theTool);
   Constructs a command with theTool as its bound tool.
void SetTool(const TTool& theTool);
   Sets theTool as the commands bound tool. The command discards its old tool, if it had one.
Boolean GetSelected();
   Returns whether the commands bound tool is the current tool (i.e. whether a control holding this command should show itself as "selected).
void SetSelected(Boolean);
   Can be used as a controls CommandBooleanSetter, but it really does nothing. The command sets its selected state based solely on notification from the tool server.
TInterest* CreateSelectionStateChangedInterest() const;
   Use this interest to receive notification when the selected state of a particular command changes. The command uses this interest when a control calls TSetCurrentToolCmd::ConnectData().
TSetToDefaultToolCmd
   Sets the current tool to the default tool.

### CURSOR GRAPHICS

MGraphic subclasses with pre-built geometries. Figure 22 illustrates some of the pre-built geometries.
**TCrossHairGraphic**
   A draw program style cross hair 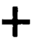 .
**TExGraphic**
   A big pink X, used for debugging 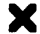 .
**TArrowGraphic**
   An arrow 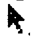 .

### UTILITY CLASSES

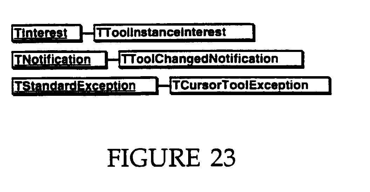

TToolInstanceInterest
   This interest is constructed with a TAbstractTool. It expresses an interest in a particular instance of a TAbstractTool becoming the current tool. Figure 23 illustrates the utility classes in accordance with a preferred embodiment.
TToolInstanceInterest(const TAbstractTool&, MNotifier*,
   const TToken&);
   TToolChangedNotification
   The Tool Server throws TToolChangedNotification every time the current tool changes. The notification holds a TToolSurrogate for and he class name of the new current tool.
   **Methods for extracting data from the notification:**
   TToolSurrogate GetToolSurrogate() const;
   TToken GetToolType() const;
   TCursorToolException
   The exception subclass thrown by the Cursor Tool framework.
   **Errors defined by TCursorToolException:**
   kNoBoundCursor = 0x1D02
   TSetCurrentToolCmd::Do()called with no bound cursor. This exception is currently not used. It will be thrown when the cursor server supports multiple cursors. At that time, programmers will need to bind both a tool and a cursor to the command before issuing it.
**kNoBoundToolInCommand = 0x1D02**
   Thrown when trying to call a method on TSetCurrentToolCmd that requires a bound tool when the command has no bound tool.
   **kNoBoundToolInServer = 0x1D03**
   Thrown when trying to call a method on TToolServer that requires a current tool before a current tool has been set.

## Claims

1. A method for performing operations on a computer with a display device (38) for generating a screen display having a plurality of frame areas (700), each of the plurality of frame areas being generated by an application program and comprising a visual representation of data, the method using a movable pointing device (26), a selection means, means for generating a cursor location and means responsive to movement of the pointing device for moving the cursor location to various screen display locations, the method is characterized by the steps of:
(a) creating a tool server object (1810) containing information identifying a single cursor tool which operates across the plurality of frame areas, each of the frame areas being a different frame type (710, 730), and methods for determining frame types in which data can be manipulated by the cursor tool;
(b) detecting a selection signal generated by the selection means (1840);
(c) identifying a cursor location on the screen display when the selection signal is detected;
(d) determining one frame area (800, 810, 830) of the pluralities of frame areas enclosing the cursor location and a frame type of the one frame area;
(e) causing the application program to call one of the methods in the tool server object (1820) in order to determine whether the cursor tool can operate on the data in the frame type of the one frame area;
(f) modifying data within the frame area displayed at the cursor location (SetCurrentToolCmd) in accordance with the cursor tool when the cursor tool can operate with the frame type of the one frame area;
(g) displaying predetermined default cursor graphic data at the cursor location when the cursor tool cannot operate with the frame type of the one frame area.

2. A method as recited in claim 1 wherein the application program operates in an address space and wherein step (f) comprises the steps of:
(f1) creating a tool object comprising methods for modifying data within the frame area displayed at the cursor location in an address space different from the application address space; and
(f2) calling a method in the tool object to modify data.

3. A method as recited in claim 1 wherein step (a) comprises the steps of:
(a1) displaying a menu of tool objects;
(a2) obtaining identification information identifying an active one of the menu of tool objects;
(a3) calling a method in the tool object to store the identification information in the tool server object; and
(a4) visually modifying the active tool object in the menu of tool objects to indicate the active cursor tool.

4. A method as recited in claim 3 wherein step (a2) comprises the step of selecting a tool object from the menu of tool objects.

5. A method as recited in claim 3 wherein step (a2) comprises the step of displaying a tool object in the menu of tool objects.

6. A method as recited in claim 1 wherein the tool server object includes cursor graphic information corresponding to the cursor tool and step (g) comprises the step of:
(g3) displaying the cursor graphic information at the cursor location.

7. A method as recited in claim 6 wherein step (a) comprises the step of:
(a5) creating a tool server object containing cursor graphic information which depends on the cursor tool.

8. A method as recited in claim 6 wherein step (a) comprises the step of:
(a6) creating a tool server object containing cursor graphic information which depends on the cursor tool state.

9. An apparatus for cursor tool processing, comprising:
(a) processor (10);
(b) a storage (14) attached to and under the control of the processor;
(c) a display (38) attached to and under the control of the processor for generating a screen display having a plurality of frame areas, each of the plurality of frame areas being generated by an application program and comprising a visual representation of data;
(d) means for creating a tool server object (1810) containing information identifying a single cursor tool which operates across the plurality of frame areas, each of the plurality of frame areas (800, 810, 830) being a different frame type, and methods for determining frame types in which data can be manipulated by the cursor tool;
(e) a movable pointing device (26);
(f) means for generating a cursor location, the generating means being responsive to movement of the pointing device for moving the cursor location to various screen display locations;
(g) means for detecting a selection signal (1840);
(h) means for identifying a cursor location on the screen display when the selection signal is detected;
(i) means responsive to the cursor location for determining one frame area of the plurality of frame areas enclosing the cursor location and a frame type of the one frame area;
(j) means responsive to the determination of the one frame for calling one of the methods in the tool server object in order to determine whether the cursor tool can operate on the data in the frame type in the one frame area;
(k) means responsive to the detection of a selection signal for modifying data in the frame area enclosing the cursor location in accordance with the cursor tool when the cursor tool can operate with the frame type of the one frame area; and
(I) means responsive to the detection of a selection signal for displaying predetermined default cursor graphic data at the cursor location when the cursor tool cannot operate with the frame type of the one frame area.

10. An apparatus as recited in claim 9 wherein the application program operates in an address space and wherein the data modifying means comprises a tool object containing methods for modifying data in the frame area enclosing the cursor location in an address space different from the application address space; and means responsive to the selection signal for calling a method in the tool object to modify data.

11. An apparatus as recited in claim 10 wherein the tool server object creation means comprises:
means controlled by the processor for displaying a menu of tool objects on the screen display;
means for obtaining identification information identifying an active one of the menu of tool objects;
means responsive to the identification information for calling a method in the tool server object to store the identification information in the tool server object; and
means responsive to the identification information for visually modifying the active tool object in the menu of tool objects to indicate the active cursor tool.

12. An apparatus as recited in claim 11 wherein the tool server object creation means comprises means for selecting a tool object from the menu of tool objects.

13. An apparatus as recited in claim 11 wherein the tool server object creation means comprises means for displaying a tool object in the menu of tool objects.

14. An apparatus as recited in claim 9 wherein the tool server object includes cursor graphic information corresponding to the cursor tool and the data modifying means comprises means for displaying the cursor graphic information at the cursor location.

15. An apparatus as recited in claim 9 wherein the tool server object creation means comprises means for creating a tool server object containing cursor graphic information which depends on the cursor tool.

16. An apparatus as recited in claim 9 wherein the tool server object creation means comprises means for creating a tool server object containing cursor graphic information which depends on the cursor tool state.

17. A method for performing cursor tool operations on a computer (10) having a memory (14), an object-oriented operating system, and an attached display (38) for generating a screen display with a frame region comprising a visual representation of data with a specific data type, a movable pointing device (26), means responsive to movement of the pointing device for generating a cursor location and moving the cursor location to various screen display locations and means responsive to the screen location for associating therewith a current cursor tool, the method comprising the steps of:
(a) detecting that the cursor location has entered the frame region (1800) on the screen display;
(b) obtaining the current cursor tool corresponding to the detected cursor location (SetCurrentTool);
(c) obtaining a tool negotiator object (TToolNegotiator) corresponding to the current cursor tool, the tool negotiator object comprising current cursor tool information indicating data types which can be manipulated by the current cursor tool and a method for interrogating the current cursor tool information;
(d) calling the tool negotiator object method to determine if the current cursor tool can manipulate the data within the frame region on the screen display;
(e) obtaining cursor graphic information corresponding to the current cursor tool; and
(f) displaying the cursor graphic information at the cursor location when the current cursor tool can manipulate the data within the frame.

18. A method as recited in claim 17, wherein step (d) includes the following steps:
(d1) obtaining a list data types which can be manipulated by the current cursor tool; and
(d2) comparing the list of data types with a data type of the data within the frame region on the screen display.

19. A method as recited in claim 17, wherein the pointing device comprises a selection means and the method comprises steps of:
(g) detecting a selection signal generated by the selection means;
(h) obtaining a tool interactor object from the tool negotiator object, the tool interactor object containing a method for modifying data in the frame region;
(i) transferring control to the tool interactor object; and
(j) using the tool interactor object method for modifying data in the frame region at the cursor location.

20. A method as recited in claim 17, including the step of embedding a new frame region within the frame region on the screen display.

## Patentansprüche

1. Ein Verfahren zur Ausführung von Operationen in einem Computer mit einem Anzeigegerät (38) zum Erzeugen einer Bildschirmanzeige, die eine Vielzahl von Rahmenbereichen (700) aufweist, jeder der Vielzahl von Rahmenbereiche wird durch ein Anwendungsprogramm erzeugt und umfaßt eine visuelle Darstellung von Daten, das Verfahren verwendet eine bewegliche Zeigereinrichtung (26), ein Auswahlmittel, Mittel zum Erzeugen einer Cursorposition und Mittel, die auf eine Bewegung der Zeigereinrichtung ansprechen zur Bewegung der Cursorposition auf verschieden Orte der Bildschirmanzeige, das Verfahren ist gekennzeichnet durch die Schritte:
(a) Erzeugen eines Werkzeug-Server-Objekts (1810), das Informationen enthält, die ein einzelnes Cursorwerkzeug identifizieren, das über die Vielzahl von Rahmenbereichen wirksam ist, wobei jeder der Rahmenbereiche einem unterschiedlichen Rahmentyp (710, 730) angehört, und das Methoden zur Bestimmung des Rahmentyps enthält, in dem Daten durch das Cursorwerkzeug verändert werden können;
(b) Feststellen eines Auswahlsignals, das durch die Auswahlmittel (1840) erzeugt wird;
(c) Identifizieren einer Cursorposition auf dem Bildschirm, wenn das Auswahlsignal festgestellt worden ist;
(d) Bestimmen eines Rahmenbereichs (800, 810, 830) aus der Vielzahl von Rahmenbereichen, der die Cursorposition enthält, und eines Rahmentyps des einen Rahmenbereichs;
(e) Veranlassen des Anwendungsprogramms zum Aufruf einer der Methoden im Werkzeug-Server-Objekt (1820) zum Bestimmen, ob das Cursorwerkzeug zur Bearbeitung der Daten im Rahmentyp des einen Rahmenbereichs wirksam werden kann;
(f) Verändern von Daten im Rahmenbereich, der an der Cursorposition (SetCurrentToolCmd) angezeigt wird, in Übereinstimmung mit dem Cursorwerkzeug, wenn das Cursorwerkzeug zur Bearbeitung der Daten im Rahmentyp des einen Rahmenbereichs wirksam werden kann;
(g) Anzeigen vorbestimmter Cursorgraphik-Vorgabedaten an der Cursorposition, wenn das Cursorwerkzeug zur Bearbeitung der Daten im Rahmentyp des einen Rahmenbereichs nicht wirksam werden kann.

2. Ein Verfahren nach Anspruch 1, worin das Anwendungsprogramm in einem Adressraum arbeitet und worin Schritt (f) den Schritt umfaßt:
(f1) Erzeugen eines Werkzeug-Objekts, das Methoden enthält zur Veränderung von innerhalb des Rahmenbereichs an der Cursorposition angezeigten Daten in einem Adressraum, der sich von dem Adressraum der Anwendung unterscheidet; und
(f2) Aufrufen einer Methode in dem Werkzeug-Objekt zum Verändern von Daten.

3. Ein Verfahren nach Anspruch 1, worin Schritt (a) die Schritte umfaßt:
(a1) Anzeige eines Menüs von Werkzeug-Objekten;
(a2) Erhalten von Identifizierungsinformationen, die ein aktives Werkzeug-Objekt im Menü von Werkzeug-Objekten identifizieren;
(a3) Aufruf einer Methode im Werkzeug-Objekt zum Speichern der Identifizierungsinformationen im Werkzeug-Server-Objekt; und
(a4) Verändern der Ansicht des aktiven Werkzeug-Objekts im Menü von Werkzeug-Objekten zum Kenntlichmachen des aktiven Cursorwerkzeugs.

4. Ein Verfahren nach Anspruch 3, worin Schritt (a2) den Schritt der Auswahl eines Werkzeug-Objekts aus dem Menü der Werkzeug-Objekte umfaßt.

5. Ein Verfahren nach Anspruch 3, worin Schritt (a2) den Schritt der Anzeige eines Werkzeug-Objekts aus dem Menü der Werkzeug-Objekte umfaßt.

6. Ein Verfahren nach Anspruch 1, worin das Werkzeug-Server-Objekt Cursorgraphik-Informationen entsprechend dem Cursorwerkzeug enthält und Schritt (g) den Schritt umfaßt:
(g3) Anzeigen der Cursorgraphik-Informationen an der Cursorposition.

7. Ein Verfahren nach Anspruch 6, worin Schritt (a) den Schritt umfaßt:
(a5) Erzeugen eines Werkzeug-Server-Objekts, das Cursorgraphik-Informationen enthält, die von dem Cursorwerkzeug abhängen.

8. Ein Verfahren nach Anspruch 6, worin Schritt (a) den Schritt umfaßt:
(a6) Erzeugen eines Werkzeug-Server-Objekts, das Cursorgraphik-Informationen enthält, die vom Zustand des Cursorwerkzeugs abhängen.

9. Eine Einrichtung zur Cursorwerkzeug-Verarbeitung, umfassend:
(a) einen Prozessor (10);
(b) einen Speicher (14), der an den Prozessor angeschlossen ist und von diesem gesteuert wird;
(c) ein Anzeigegerät (38), das an den Prozessor angeschlossen ist und von diesem gesteuert wird zum Erzeugen einer Bildschirmanzeige, die eine Vielzahl von Rahmenbereichen aufweist, jeder der Vielzahl von Rahmenbereichen wird durch ein Anwendungsprogramm erzeugt und umfaßt eine visuelle Darstellung von Daten;
(d) Mittel zum Erzeugen eines Werkzeug-Server-Objekts (1810), das Informationen enthält, die ein einzelnes Cursorwerkzeug identifizieren, das über die Vielzahl von Rahmenbereichen wirksam ist, wobei jeder der Vielzahl von Rahmenbereichen (800, 810, 830) einem unterschiedlichen Rahmentyp angehört, und das Methoden zur Bestimmung des Rahmentyps enthält, in dem Daten durch das Cursorwerkzeug verändert werden können;
(e) eine bewegliche Zeigereinrichtung (26);
(f) Mittel zum Erzeugen einer Cursorposition, die Erzeugungsmittel sprechen auf eine Bewegung der Zeigereinrichtung an zur Bewegung der Cursorposition auf verschiedene Orte der Bildschirmanzeige;
(g) Mittel zum Feststellen eines Auswahlsignals (1840);
(h) Mittel zum Identifizieren einer Cursorposition auf der Bildschirmanzeige, wenn das Auswahlsignal festgestellt worden ist;
(i) Mittel, die auf die Cursorposition ansprechen zum Bestimmen eines Rahmenbereichs aus der Vielzahl von Rahmenbereichen, der die Cursorposition enthält, und eines Rahmentyps des einen Rahmenbereichs;
(j) Mittel, die auf die Feststellung des einen Rahmenbereichs ansprechen zum Aufruf einer der Methoden im Werkzeug-Server-Objekt zum Bestimmen, ob das Cursorwerkzeug zur Bearbeitung der Daten im Rahmentyp des einen Rahmenbereichs wirksam werden kann;
(k) Mittel, die auf die Feststellung eines Auswahlsignals wirksam werden zum Verändern von Daten im Rahmenbereich, der die Cursorposition enthält, in Übereinstimmung mit dem Cursorwerkzeug, wenn das Cursorwerkzeug zur Bearbeitung der Daten im Rahmentyp des einen Rahmenbereichs wirksam werden kann;
(l) Mittel, die auf die Festellung eines Auswahlsignals wirksam werden zum Anzeigen vorbestimmter Cursorgraphik-Vorgabedaten an der Cursorposition, wenn das Cursorwerkzeug zur Bearbeitung der Daten im Rahmentyp des einen Rahmenbereichs nicht wirksam werden kann.

10. Eine Einrichtung nach Anspruch 9, worin das Anwendungsprogramm in einem Adressraum arbeitet und worin die Mittel zum Verändern von Daten ein Werkzeug-Objekt umfassen, das Methoden enthält zur Veränderung von Daten innerhalb des Rahmenbereichs, der die Cursorposition umschließt, in einem Adressraum, der sich von dem Adressraum der Anwendung unterscheidet; und Mittel, die auf ein Auswahlsignal wirksam werden zum Aufruf einer Methode in dem Werkzeug-Objekt zum Verändern von Daten.

11. Eine Einrichtung nach Anspruch 10, worin die Mittel zum Erzeugen eines Werkzeug-Server-Objekts Mittel umfassen:
Mittel, die vom Prozessor gesteuert werden zum Anzeigen eines Menüs von Werkzeug-Objekten auf der Bildschirmanzeige;
Mittel zum Erhalten von Identifizierungsinformationen, die ein aktives Werkzeug-Objekt im Menü von Werkzeug-Objekten identifizieren;
Mittel, die auf die Identifizierungsinformationen ansprechen zum Aufruf einer Methode im Werkzeug-Objekt zum Speichern der Identifizierungsinformationen im Werkzeug-Server-Objekt; und
Mittel, die auf die Identifizierungsinformationen ansprechen zum Verändern der Ansicht des aktiven Werkzeug-Objekts im Menü von Werkzeug-Objekten zum Kenntlichmachen des aktiven Cursorwerkzeugs.

12. Eine Einrichtung nach Anspruch 11, worin die Mittel zum Erzeugen eines Werkzeug-Server-Objekts Mittel umfassen zur Auswahl eines Werkzeug-Objekts aus dem Menü der Werkzeug-Objekte.

13. Eine Einrichtung nach Anspruch 11, worin die Mittel zum Erzeugen eines Werkzeug-Server-Objekts Mittel umfassen zur Anzeige eines Werkzeug-Objekts aus dem Menü der Werkzeug-Objekte.

14. Eine Einrichtung nach Anspruch 9, worin das Werkzeug-Server-Objekt Cursorgraphik-Informationen entsprechend dem Cursorwerkzeug enthält und die Mittel zum Verändern von Daten Mittel umfassen zum Anzeigen der Cursorgraphik-Informationen an der Cursorposition.

15. Eine Einrichtung nach Anspruch 9, worin die Mittel zum Erzeugen eines Werkzeug-Server-Objekts Mittel umfassen zum Erzeugen eines Werkzeug-Server-Objekts, das Cursorgraphik-Informationen enthält, die von dem Cursorwerkzeug abhängen.

16. Eine Einrichtung nach Anspruch 9, worin die Mittel zum Erzeugen eines Werkzeug-Server-Objekts Mittel umfassen zum Erzeugen eines Werkzeug-Server-Objekts, das Cursorgraphik-Informationen enthält, die vom Zustand des Cursorwerkzeugs abhängen.

17. Ein Verfahren zur Ausführung von Cursorwerkzeug-Operationen in einem Computer (10) der einen Speicher (14), ein objekt-orientiertes Betriebssystem und ein angeschlossenes Anzeigegerät (38) aufweist zum Erzeugen einer Bildschirmanzeige mit einem Rahmenbereich, der eine visuelle Darstellung von Daten mit einem bestimmten Datentyp umfaßt, eine bewegliche Zeigereinrichtung (26), Mittel, die auf eine Bewegung der Zeigereinrichtung ansprechen zum Erzeugen einer Cursorposition und zum Bewegen der Cursorposition auf verschiedene Orte der Bildschirmanzeige, und Mittel, die auf den Ort der Bildschirmanzeige ansprechen zum Verbinden eines gegenwärtigen Cursorwerkzeugs mit diesem Ort, das Verfahren enthält die Schritte:
(a) Feststellen, daß die Cursorposition in den Rahmenbereich (1800) auf der Bilschirmanzeige eingetreten ist;
(b) Erhalten des gegenwärtigen Cursorwerkzeugs entsprechend der festgestellten Cursorposition (SetCurrentTool);
(c) Erhalten eines Werkzeug-Vermittlungs-Objekts (TToolNegotiator) entsprechend dem gegenwärtigen Cursorwerkzeug, das Werkzeug-Vermittlungs-Objekt umfaßt laufende Cursorwerkzeug-Informationen, welche die Datentypen anzeigen, die durch das gegenwärtige Cursorwerkzeug verändert werden können, und eine Methode zum Aufruf der gegenwärtigen Cursorwerkzeug-Informationen;
(d) Aufruf der Methode des Werkzeug-Vermittlungs-Objekts zur Bestimmung, ob das laufende Cursorwerkzeug die Daten im Rahmenbereich der Bildschirmanzeige verändern kann;
(e) Erhalten von Cursorgraphik-Informationen entsprechend dem laufenden Cursorwerkzeug; und
(f) Anzeigen der Cursorgraphik-Informationen an der Cursorposition, wenn das laufende Cursorwerkzeug die Daten im Rahmen verändern kann.

18. Ein Verfahren nach Anspruch 17, worin Schritt (d) die folgenden Schritte enthält:
(d1) Erhalten einer Liste von Datentypen, die durch das gegenwärtige Cursorwerkzeug verarbeitet werden können; und
(d2) Vergleichen der Liste von Datentypen mit dem Datentyp der Daten im Rahmenbereich auf der Bildschirmanzeige.

19. Ein Verfahren nach Anspruch 17, worin die Zeigereinrichtung ein Auswahlmittel umfaßt und das Verfahren die Schritte umfaßt:
(g) Feststellen eines Auswahlsignals, das durch die Auswahlmittel erzeugt wird;
(h) Erhalten eines Werkzeug-Interaktions-Objekts vom Werkzeug-Vermittlungs-Objekt, das Werkzeug-Interaktions-Objekt enthält eine Methode zur Veränderung von Daten in dem Rahmenbereich;
(i) Übertragen der Steuerung zum Werkzeug-Interaktions-Objekt; und
(j) Benutzen der Methode des Werkzeug-Interaktions-Objekts zur Veränderung von Daten in dem Rahmenbereich an der Cursorposition.

20. Ein Verfahren nach Anspruch 17, enthaltend den Schritt der Einbettung eines neuen Rahmenbereichs in den Rahmenbereich auf der Bildschirmanzeige.

## Revendications

1. Méthode pour effectuer des opérations sur un ordinateur avec un dispositif d'affichage (38) pour générer un écran d'affichage ayant une pluralité de zones de trames (700), chacune de la pluralité des zones de trames étant générée par un programme d'application et comprenant une représentation visuelle de données, la méthode utilisant un dispositif de pointage déplaçable (26), un moyen de sélection, des moyens pour générer un emplacement de curseur et des moyens pour, en réponse au mouvement du dispositif de pointage, déplacer l'emplacement du curseur à différents emplacements de l'écran d'affichage, la méthode étant caractérisée par les étapes de :
a) créer un objet serveur d'outils (1810) contenant des informations identifiant un seul outil curseur qui opère parmi la pluralité de zones de trames, chacune des zones de trames étant d'un différent type de trame (710, 730), et des méthodes pour déterminer des types de trames dans lesquels les données peuvent être manipulées par l'outil curseur,
b) détecter un signal de sélection généré par le moyen de sélection (1840),
c) identifier un emplacement de curseur sur l'écran d'affichage lorsque le signal de sélection est détecté,
d) déterminer une zone de trame (800, 810, 830) de la pluralité de zones de trames incluant l'emplacement de curseur et un type de trame de cette zone de trame,
e) faire appeler une des méthodes dans l'objet serveur d'outils par le programme d'application (820) de façon à déterminer si l'outil curseur peut opérer sur les données dans le type de trame de cette zone de trame,
f) modifier les données dans la zone de trame affichée à l'emplacement du curseur (SetCurrentToolCmd) conformément à l'outil curseur lorsque l'outil curseur peut opérer dans le type de trame de cette zone de trame,
g) afficher des données graphiques de curseur par défaut prédéterminées à l'emplacement de curseur lorsque l'outil curseur ne peut pas opérer avec le type de trame de cette zone de trame.

2. Méthode telle que définie dans la revendication 1, dans laquelle le programme d'application opère dans un espace adresse et dans laquelle l'étape f) comprend les étapes de:
f1) créer un objet outil comprenant des méthodes pour modifier les données dans la zone de trame affichée à l'emplacement du curseur dans un espace adresse différent de l'espace adresse de l'application, et
f2) appeler une méthode dans l'objet outil pour modifier des données.

3. Méthode telle que définie dans la revendication 1, dans laquelle l'étape a) comprend les étapes de :
a1) afficher un menu des objets outils,
a2) obtenir des informations d'identification identifiant un objet actif dans le menu d'objets outils,
a3) appeler une méthode dans l'objet outil pour emmagasiner les informations d'identification dans l'objet serveur d'outil, et
a4) modifier visuellement l'objet outil actif dans le menu des objets outils pour indiquer l'outil curseur actif.

4. Méthode telle que définie dans la revendication 3, dans laquelle l'étape a2) comprend l'étape de sélectionner un objet outil dans le menu des objets outils.

5. Méthode telle que définie dans la revendication 3, dans laquelle l'étape a2) comprend l'étape d'afficher un objet outil dans le menu des objets outils.

6. Méthode telle que définie dans la revendication 1, dans laquelle l'objet serveur d'outil comprend des informations graphiques de curseur correspondant à l'outil curseur et l'étape g) comprend l'étape de :
g3) afficher les informations graphiques de curseur à l'emplacement de curseur.

7. Méthode telle que définie dans la revendication 6, dans laquelle l'étape a) comprend l'étape de :
a5) créer un objet serveur d'outil contenant des informations graphiques de curseur qui dépendent de l'outil curseur.

8. Méthode telle que définie dans la revendication 6, dans laquelle l'étape a) comprend l'étape de :
a6) créer un objet serveur d'outil contenant des informations graphiques de curseur qui dépendent de l'état de l'outil curseur.

9. Appareil pour traiter un outil curseur, comprenant :
a) un processeur (10),
b) une mémoire (14) connectée à et sous le contrôle du processeur,
c) un affichage (38) connecté à et sous le contrôle du processeur pour générer un écran d'affichage ayant une pluralité de zones de trames, chacune de la pluralité des zones de trames étant générée par un programme d'application et comprenant une représentation visuelle de données,
d) des moyens pour créer un objet serveur d'outils (1810) contenant des informations identifiant un seul outil curseur qui opère parmi la pluralité de zones de trames, chacune des zones de trames (800, 810, 830) étant d'un différent type de trame, et des méthodes pour déterminer des types de trames dans lesquels les données peuvent être manipulées par l'outil curseur,
e) un dispositif de pointage déplaçable (26),
f) des moyens pour générer un emplacement de curseur, les moyens de génération étant sensibles au mouvement du dispositif de pointage, déplacer l'emplacement du curseur à différents emplacements de l'écran d'affichage,
g) des moyens pour détecter un signal de sélection (1840),
h) des moyens pour identifier un emplacement de curseur sur l'écran d'affichage lorsque le signal de sélection est détecté,
i) des moyens sensibles à l'emplacement de curseur pour déterminer une zone de trame de la pluralité de zones de trames incluant l'emplacement de curseur et un type de trame de cette zone de trame,
j) des moyens sensibles à la détermination de cette trame pour appeler une des méthodes dans l'objet serveur d'outils de façon à déterminer si l'outil curseur peut opérer sur les données dans le type de trame de cette zone de trame,
k) des moyens sensibles à la détection d'un signal de sélection pour modifier les données dans la zone de trame affichée à l'emplacement du curseur conformément à l'outil curseur lorsque l'outil curseur peut opérer dans le type de trame de cette zone de trame, et
l) des moyens sensibles à la détection d'un signal de sélection pour afficher des données graphiques de curseur par défaut prédéterminées à l'emplacement de curseur lorsque l'outil curseur ne peut pas opérer avec le type de trame de cette zone de trame.

10. Appareil tel que défini dans la revendication 9, dans lequel le programme d'application opère dans un espace adresse et dans lequel les moyens de modification de données comprennent un objet outil contenant des méthodes pour modifier les données dans la zone de trame affichée à l'emplacement du curseur dans un espace adresse différent de l'espace adresse de l'application, et des moyens sensibles au signal de sélection pour appeler une méthode dans l'objet outil pour modifier des données.

11. Appareil tel que défini dans la revendication 9, dans lequel les moyens de création d'objet serveur d'outils comprennent
des moyens contrôlés par le processeur pour afficher un menu des objets outils sur l'écran d'affichage,
des moyens pour obtenir des informations d'identification identifiant un objet actif dans le menu d'objets outils,
des moyens sensibles aux informations d'identification pour appeler une méthode dans l'objet serveur d'outils et emmagasiner les informations d'identification dans l'objet serveur d'outils, et
des moyens sensibles aux informations d'identification pour modifier visuellement l'objet outil actif dans le menu des objets outils et indiquer l'outil curseur actif.

12. Appareil tel que défini dans la revendication 11, dans lequel les moyens de création d'objet serveur d'outils comprennent des moyens pour sélectionner un objet outil dans le menu des objets outils.

13. Appareil tel que défini dans la revendication 11, dans lequel les moyens de création d'objet serveur d'outils comprennent des moyens pour afficher un objet outil dans le menu des objets outils.

14. Appareil tel que défini dans la revendication 9, dans lequel les moyens de création d'objet serveur d'outils comprennent des informations graphiques de curseur correspondant à l'outil curseur et les moyens de modification de données comprennent des moyens pour afficher les informations graphiques de curseur à l'emplacement de curseur.

15. Appareil tel que défini dans la revendication 9, dans lequel les moyens de création d'objet serveur d'outils comprennent des moyens pour créer un objet serveur d'outil contenant des informations graphiques de curseur qui dépendent de l'outil curseur.

16. Appareil tel que défini dans la revendication 9, dans lequel les moyens de création d'objet serveur d'outils comprennent des moyens pour créer un objet serveur d'outil contenant des informations graphiques de curseur qui dépendent de l'état de l'outil curseur.

17. Méthode pour effectuer des opérations d'outil de curseur sur un ordinateur (10) ayant une mémoire (14), un système d'exploitation orienté objet, et un affichage (38) connecté pour générer un écran d'affichage avec une région de trame comprenant une représentation visuelle des données d'un type de données spécifique, un dispositif de pointage déplaçable (26), des moyens sensibles au mouvement du dispositif de pointage pour générer un emplacement de curseur et déplacer l'emplacement de curseur à différents emplacements de l'écran, et des moyens sensibles à l'emplacement de l'écran pour lui associer un outil de curseur courant, la méthode comprenant les étapes de :
a) détecter que l'emplacement de curseur a pénétré dans la région de trame (1800) sur l'écran d'affichage,
b) obtenir l'outil curseur correspondant à l'emplacement de curseur détecté (SetCurrentTool),
c) obtenir un objet négociateur d'outil (TToolNegotiator) correspondant à l'outil curseur courant, l'objet négociateur d'outil comprenant des informations d'outil curseur courant indiquant des types de données qui peuvent être traitées par l'outil curseur courant et une méthode pour interroger les informations d'outil curseur courant,
d) appeler la méthode d'objet de négociateur d'outil pour déterminer si l'outil curseur courant peut traiter les données dans la région de trame sur l'écran d'affichage,
e) obtenir des informations graphiques de curseur correspondant à l'outil curseur courant, et
f) afficher les informations à l'emplacement de curseur lorsque l'outil curseur courant peut traiter les données dans le trame.

18. Méthode telle que définie dans la revendication 17, dans laquelle l'étape d) comprend les étapes suivantes :
d1) obtenir une liste des types de données qui peuvent être traitées par l'outil curseur courant, et
d2) comparer la liste des types de données avec un type de données des données se trouvant dans la région de trame sur l'écran d'affichage.

19. Méthode telle que définie dans la revendication 17, dans laquelle le dispositif de pointage comprend un moyen de sélection et la méthode comprend les étapes de :
g) détecter un signal de sélection généré par le moyen de sélection,
h) obtenir un objet d'interaction d'outil à partir de l'objet négociateur d'outil, l'objet d'interaction d'outil contenant une méthode pour modifier des données dans la région de trame,
i) transférer le contrôle à l'objet d'interaction d'outil, et
j) utiliser la méthode d'objet d'interaction d'outil pour modifier des données dans la région de trame à l'emplacement de curseur.

20. Méthode telle que définie dans la revendication 17, comprenant l'étape d'incorporer une nouvelle région de trame dans la région de trame sur l'écran d'affichage.
